(19) Europäisches Patentamt
European Patent Office
Office européen des brevets

(11) **EP 4 625 670 A1**

(12) **EUROPEAN PATENT APPLICATION**
published in accordance with Art. 153(4) EPC

(43) Date of publication:
**01.10.2025 Bulletin 2025/40**

(21) Application number: **23932854.5**

(22) Date of filing: **22.12.2023**

(51) International Patent Classification (IPC):
**H01M 50/449** (2021.01)     **H01M 50/491** (2021.01)
**H01M 50/497** (2021.01)     **H01M 50/494** (2021.01)
**H01M 50/417** (2021.01)     **H01M 50/434** (2021.01)
**H01M 50/414** (2021.01)

(52) Cooperative Patent Classification (CPC):
Y02E 60/10

(86) International application number:
**PCT/CN2023/141016**

(87) International publication number:
**WO 2024/212583 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.04.2023 CN 202320838552 U**

(71) Applicant: **Contemporary Amperex Technology
Co., Limited
Ningde, Fujian 352100 (CN)**

(72) Inventors:
• **WANG, Zhaoguang
  Ningde, Fujian 352100 (CN)**

• **HAN, Chongwang
  Ningde, Fujian 352100 (CN)**
• **YANG, Jianrui
  Ningde, Fujian 352100 (CN)**
• **SUN, Chengdong
  Ningde, Fujian 352100 (CN)**
• **HUANG, Siying
  Ningde, Fujian 352100 (CN)**
• **OUYANG, Chuying
  Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **SEPARATOR, BATTERY, AND ELECTRICAL APPARATUS**

(57)     The present application relates to the technical field of batteries, and discloses a separator, a battery, and a power consuming apparatus. The separator includes at least three layers of stacked base films. A first bonding layer bonded to at least two adjacent layers of the base films is arranged therebetween. The separator is arranged to include at least three layers of the stacked base films, and the first bonding layer is arranged between at least two layers of the base films. The base films on two sides of the first bonding layer are bonded by the first bonding layer. The base films bonded together provide support to each other, thereby making the single-layer base film not prone to be punctured, and further reducing a risk of the separator being punctured, so as to improve safety performance of a battery to which the separator is applied.

FIG. 5

2031
2032

## Description

The present application claims priority to Chinese Patent Application No. 202320838552.4, filed with the China National Intellectual Property Administration on April 14, 2023 and entitled "SEPARATOR, BATTERY, AND POWER CONSUMING APPARATUS".

## TECHNICAL FIELD

The present application relates to the technical field of batteries, and in particular, to a separator, a battery, and a power consuming apparatus.

## BACKGROUND

A secondary battery can reversely convert chemical energy and electric energy, and thus is an ideal carrier for human being to use and store energy. Lithium-ion batteries have been widely applied to various fields such as 3C electronics, electric vehicles, and energy storage power stations due to their advantages of high energy density, excellent cycle performance, and environmental friendliness. The lithium-ion battery usually includes a positive electrode, a negative electrode, a separator, and an electrolyte solution. The main function of the separator is to separate the positive electrode from the negative electrode, and prevent short circuit caused by contact between the positive electrode and the negative electrode. In addition, the separator further has a function of allowing ions in the electrolyte solution to pass through. The performance of the separator determines the interface structure, the internal resistance, and the like of a battery, and directly affects the characteristics such as the cycle and safety of the battery.

Currently, a commercial separator mainly includes a single-layer polyolefin type base film, such as a polyethylene (PE) separator or a polypropylene (PP) separator. Generally, the mechanical properties of the single-layer base film are relatively poor, affected by the preparation process, the surface of an electrode plate in the battery is uneven, and consequently when the separator is sandwiched between positive and negative electrode plates, the separator is likely to be punctured, thereby causing potential safety hazards.

## SUMMARY

In view of the above problems, embodiments of the present application provide a separator, a battery, and a power consuming apparatus, aiming to solve the problem that an existing separator is poor in puncture resistance.

According to a first aspect, an embodiment of the present application provides a separator, which includes at least three layers of stacked base films. A first bonding layer bonded to at least two adjacent layers of the base films is arranged therebetween.

The separator provided in the embodiment of the present application includes at least three layers of the stacked base films, and the first bonding layer is arranged between at least two layers of the base films. The base films on two sides of the first bonding layer are bonded by the first bonding layer. The base films bonded together provide support to each other, thereby improving mechanical properties of the separator, making the single-layer base film not prone to be punctured, and further reducing a risk of the separator being punctured, so as to improve safety performance of a battery to which the separator is applied.

In some embodiments, at least two adjacent layers of the base films are laminated.

By arranging at least two layers of the base films which are laminated on at least one side of the first bonding layer, performance of the separator can be adjusted by combinations of the base films, and meanwhile a material selection range of the base film can be expanded.

In some embodiments, the first bonding layer is arranged between every two adjacent layers of the base films. The separator is arranged to include at least three layers of the base films, and every two layers of the base films are connected by the first bonding layer sandwiched therebetween, so that overall puncture resistance of the separator is improved and the separator is applicable to some battery types having a high requirement on the puncture resistance of the separator. In some embodiments, the first bonding layer is a solid particle bonding layer, and solid particles are dispersed in the solid particle bonding layer.

In the embodiment of the present application, the solid particle bonding layer is sandwiched between two layers of the base films, so that the solid particle bonding layer is bonded to the base films. The base films are used for supporting and protecting the solid particle bonding layer, thereby preventing displacement of the solid particle bonding layer and improving structural stability of the separator. More importantly, for the embodiment of the present application, since the first bonding layer is sandwiched between two layers of the base films, the first bonding layer is arranged as the solid particle bonding layer, so that the solid particles dispersed in the solid particle bonding layer are used for improving air permeability of the solid particle bonding layer, thereby improving ion permeability of the separator. Particularly, in a case that the solid particle bonding layer is arranged between every two adjacent layers of the base films, the solid particle bonding layer is used for improving strength of the separator and meanwhile effectively ensuring the ion permeability of the separator.

In some embodiments, the solid particles are inorganic particles, and the solid particle bonding layer is an inorganic particle bonding layer.

Generally, the inorganic particles have certain hardness and heat resistance. The solid particle bonding layer is arranged as the inorganic particle bonding layer, so that a mechanical strength and heat resistance of the separator can be improved. In addition, an elastic modulus of the inorganic particles is relatively high, so that the air permeability of the inorganic particle bonding layer is ensured.

In some embodiments, the inorganic particles have a Dv50 in a range of 0.2 $\mu$m to 0.8 $\mu$m.

Generally, a larger particle size of the inorganic particles indicates a better air permeability of the inorganic particle bonding layer and an improved ion conduction rate of the separator. However, the larger particle size of the inorganic particles may cause the base film to be easily punctured by the inorganic particles, and the particle size of the inorganic particles may also affect a thickness of the inorganic particle bonding layer. A suitable average particle size of the inorganic particles may be selected according to the thickness of the inorganic particle bonding layer, a content of a binder, a number of the inorganic particle bonding layer in the separator, and the like. For example, when the thickness of the inorganic particle bonding layer is relatively small, inorganic particles having a relatively small average particle size are selected. For the separator provided in the embodiment of the present application, since there are a plurality of layers of the base films in the separator, to ensure an ion transmission rate of the separator, the base film usually has a relatively small thickness. Moreover, since the inorganic particle bonding layer is sandwiched between the base films, depending on support of the base films, by setting the average particle size Dv50 of the inorganic particles to be in the range of 0.2 $\mu$m to 0.8 $\mu$m, on the one hand, the inorganic particle bonding layer can be made thin, thereby further improving the ion conduction rate of the separator; and on the other hand, a risk of the base film being punctured can be reduced, thereby improving the structural stability of the separator.

In some embodiments, the solid particles have a specific surface area in a range of 1.05 m$^2$/g to 1.8 m$^2$/g.

Generally, the specific surface area of the solid particles may affect an infiltration effect of the solid particle bonding layer in an electrolyte solution, and a larger specific surface area of the solid particles indicates a better infiltration effect of the solid particle bonding layer. The specific surface area of the solid particles is set in the range of 1.05 m$^2$/g to 1.8 m$^2$/g to improve an infiltration rate of the separator in the electrolyte solution, thereby further improving the ion conduction rate of the separator.

In some embodiments, the first bonding layer has a thickness in a range of 0.5 $\mu$m to 2 $\mu$m.

The thickness of the first bonding layer may affect the puncture resistance and the ion conduction rate of the separator. A larger thickness indicates better puncture resistance, but a lower ion conduction rate. With reference to a structural form of the separator provided in the embodiment of the present application, the first bonding layer is arranged between the base films, and the thickness of the first bonding layer is set in the range of 0.5 $\mu$m to 2 $\mu$m, so that within this range, the puncture resistance and the ion conduction rate of the separator can be balanced, and the separator has a relatively high ion conduction rate while having relatively good puncture resistance.

In some embodiments, the base film has a thickness in a range of 1 $\mu$m to 8 $\mu$m.

The thickness of the base film may affect the puncture resistance and the ion conduction rate of the base film. A thinner base film has a smaller internal resistance and a higher ion conduction rate, but has a decreased mechanical strength and a poorer puncture strength. With reference to a structural form of the separator provided in the embodiment of the present application, the base films are arranged to be a plurality of layers, the thickness of each layer of the base films is controlled to be in the range of 1 $\mu$m to 8 $\mu$m, and the base film is made as thin as possible while the base film is ensured to have a sufficient mechanical strength, so that the puncture resistance and the ion conduction rate of the separator can be balanced, and the separator has a relatively high ion conduction rate while having relatively good puncture resistance.

In some embodiments, the base film has an average pore size in a range of 100 nm to 800 nm.

The average pore size of the base film may affect a tensile strength and the ion conduction rate of the base film. A larger average pore size of the base film indicates a smaller internal resistance and a higher ion conduction rate, but a decreased tensile strength. With reference to a structural form of the separator provided in the embodiment of the present application, the base films are arranged to be a plurality of layers, and the average pore size of each layer of the base films is controlled to be in the range of 100 nm to 800 nm, so that the tensile strength and the ion conduction rate of the separator can be balanced, and the separator has a relatively high ion conduction rate while having a relatively high tensile strength.

In some embodiments, the base film has a porosity in a range of 30% to 70%.

The porosity of the base film may affect the tensile strength and the ion conduction rate of the base film. A larger porosity of the base film indicates a smaller internal resistance and a higher ion conduction rate, but a decreased tensile strength. With reference to a structural form of the separator provided in the embodiment of the present application, the porosity of the base film is controlled to be in the range of 30% to 70%, so that the tensile strength and the ion conduction rate of the separator can be balanced, and the separator has a relatively high ion conduction rate while having a relatively high tensile strength.

In some embodiments, the base film has a surface density in a range of 2 g/m$^2$ to 10 g/m$^2$.

Since the base film has a large quantity of micro-pores, as a number of the micro-pores increases, the surface density of the base film decreases. The surface density of the base film is set in the range of 2 g/m$^2$ to10 g/m$^2$, so that the base film has a medium porosity and air permeability, which is beneficial to balance the tensile strength and the ion conduction rate of the separator.

In some embodiments, the separator has an air permeability in a range of 300 s/100 cc to 500 s/100 cc.

The air permeability of the separator is set in the range of 300 s/100 cc to 500 s/100 cc, so that when the separator is applied to a battery, the battery has good electrochemical performance.

In some embodiments, the separator has a porosity in a range of 25% to 65%.

The porosity of the separator is set in the range of 25% to 65%, so that when the separator is applied to a battery, the battery has good electrochemical performance.

In some embodiments, the separator has a transverse direction (TD) tensile strength of greater than 1000 kg/cm$^2$.

The above separator has good mechanical properties.

In some embodiments, the separator has a machine direction (MD) tensile strength of greater than 1200 kg/cm$^2$.

The above separator has good mechanical properties.

In some embodiments, the separator has a thickness in a range of 3 μm to 14 μm.

The thickness of the separator affects the mechanical properties and the ion conduction rate of the separator. An increase in the thickness of the separator enhances the mechanical properties of the separator, but decreases the ion conduction rate. Within the above thickness range, the separator has good mechanical properties and ion conduction rate.

In some embodiments, the separator further includes a second bonding layer on one side of the base film facing away from the first bonding layer. The second bonding layer is formed as an outermost layer of the separator, the first bonding layer is a ceramic coated separator (CCS) layer, and the second bonding layer is a polymer coated separator (PCS) layer.

By arranging the CCS layer and the PCS layer in the separator, the CCS layer and the PCS layer are not located on the same side of the base film, the CCS layer is located between the base films, namely, located in the separator, and the PCS layer is formed as the outermost layer of the separator. By arranging the CCS layer, the mechanical properties (including the puncture resistance and the tensile strength) of the separator are improved. The base film is used for supporting and protecting the CCS layer, thereby improving the structural stability of the separator. When the separator is used, the PCS layer may be bonded to an electrode plate of a battery, thereby improving a contact interface between the separator and the electrode plate, and improving consistency of the battery.

According to a second aspect, an embodiment of the present application provides a battery, which includes a positive electrode plate, a negative electrode plate, and the above separator separating the positive electrode plate from the negative electrode plate.

According to a third aspect, the present application provides a power consuming apparatus, which includes the above battery.

The above description only refers to an overview of the technical solution of the present application. To understand the technical means of the present application more clearly, it can be implemented according to the content of the specification. To make the above-mentioned and other purposes, features and advantages of the present application more apparent, the detailed description of the present application is exemplified below.

## BRIEF DESCRIPTION OF THE DRAWINGS

By reading the detailed description of the optional implementations below, various additional advantages and benefits will become clear to those of ordinary skill in the art. The drawings are provided solely for the purpose of illustrating the optional implementations and shall not be construed as limiting the scope of the present application. Furthermore, the same reference numerals in all the drawings denote identical components. In the drawings:

FIG. 1 is a schematic structural diagram of a vehicle according to some embodiments of the present application;

FIG. 2 is a schematic exploded structural diagram of a battery according to some embodiments of the present application;

FIG. 3 is a schematic exploded structural diagram of a battery cell according to some embodiments of the present application;

FIG. 4 is a schematic structural diagram of an electrode assembly according to some embodiments of the present application;

FIG. 5 is a schematic structural diagram I of a separator according to some embodiments of the present application;

FIG. 6 is a schematic structural diagram II of the separator according to some embodiments of the present application;

and

FIG. 7 is a schematic structural diagram III of the separator according to some embodiments of the present application.

Reference numerals in the detail description are as follows:

10, electrode plate;
20, electrode assembly; 101, negative electrode plate; 102, positive electrode plate; 201, negative electrode tab; 202, positive electrode tab; 203, separator; 2031, base film; 2032, first bonding layer; 2033, second bonding layer;
30, battery cell; 301, case; 302, end cover; 303, negative electrode adapter; 304, positive electrode adapter; 305, insulator;
40, battery; 401, box; 4011, box body; 4012, box cover body;
50, power consuming apparatus; 501, controller; and 502, motor.

## DETAILED DESCRIPTION

The embodiments of the technical solutions of the present application will be described in detail below with reference to the drawings. The following embodiments are only used for illustrating the technical solutions of the present application more explicitly, and are thus only interpreted as examples, rather than used for limiting the protection scope of the present application.

Unless otherwise defined, all technical and scientific terms used herein have the same meaning as commonly understood by those skilled in the technical field to which the present application belongs. Terms used herein are merely intended to describe objectives of the specific embodiments, and are not intended to limit the present application. The terms "include", "have", and any variant thereof in the specification and claims of the present application and the above-mentioned drawings are intended to cover a non-exclusive inclusion.

In the description according to the embodiments of the present application, the technical terms "first", "second", and the like are only used for distinguishing different objects, and should not be understood as indicating or implying relative importance or implying the number, specific order or primary and secondary relationship of indicated technical features. In the description according to the embodiments of the present application, "a plurality of" means two or more, unless otherwise explicitly and specifically defined.

Reference herein to "embodiment" means that a particular feature, structure, or characteristic described in combination with the embodiment can be included in at least one embodiment of the present application. The phrases appearing at different positions of the specification may not always refer to the same embodiment or an independent or alternative embodiment that is mutually exclusive with other embodiments. Those skilled in the art explicitly or implicitly understand that the embodiments described in the specification may be combined with other embodiments.

In the description according to the embodiments of the present application, the term "and/or" merely describes an association relationship of associated objects and represents that three relationships may exist, for example, A and/or B may represent the following three cases: only A exists, both A and B exist, and only B exists. In addition, the character "/" used herein generally indicates an "or" relationship between the associated objects.

In the description about the embodiments of the present application, the term "a plurality of" means two or more (including two). Similarly, "a plurality of groups" means two or more groups (including two groups), and "a plurality of pieces" means two or more pieces (including two pieces).

In the description about the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings and are merely for the convenience of describing the embodiments of the present application and simplifying the description, rather than indicating or implying that the noted devices or elements need to have specific directions or need to be constructed and operated in specific directions. Therefore, these terms should not be construed as limitations on the embodiments of the present application.

In the description about the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect", or "mechanically connect", or "electrically connect"; or "directly interconnect", "indirectly interconnect through an intermediate medium", "communication between interiors of two elements", or "interaction between two elements". For those of ordinary skill in the art, the specific meanings of the above terms in the embodiments of the present application may be interpreted according to specific situations.

A secondary battery can reversely convert chemical energy and electric energy, and thus is an ideal carrier for human being to use and store energy. Lithium-ion batteries have been widely applied to various fields such as 3C electronics, electric vehicles, and energy storage power stations due to their advantages of high energy density, excellent cycle performance, and environmental friendliness. The lithium-ion battery usually includes a positive electrode, a negative electrode, a separator, and an electrolyte solution. The main function of the separator is to separate the positive electrode from the negative electrode, and prevent short circuit caused by contact between the positive electrode and the negative electrode. In addition, the separator further has a function of allowing ions in the electrolyte solution to pass through. The performance of the separator determines the interface structure, the internal resistance, and the like of a battery, and directly affects the characteristics such as the cycle and safety of the battery.

Currently, a commercial separator mainly includes a single-layer polyolefin type base film, such as a polyethylene (PE) separator or a polypropylene (PP) separator. Generally, the mechanical properties of the single-layer base film are relatively poor, affected by the preparation process, the surface of an electrode plate in the battery is uneven, and consequently when the separator is sandwiched between positive and negative electrode plates, the separator is likely to be punctured, thereby causing potential safety hazards.

Based on this, an embodiment of the present application provides a novel separator. The separator includes a plurality of layers of base films. By means of superposition of the plurality of layers of the base films, the separator is punctured only when all the base films are punctured, thereby reducing a risk of the separator being punctured. Further, a first bonding layer is arranged between at least two layers of the base films. The base films on two sides of the first bonding layer are bonded by the first bonding layer. The base films bonded together provide support to each other, thereby making the single-layer base film not prone to be punctured, and further reducing a risk of the separator being punctured, so as to improve safety performance of a battery to which the separator is applied.

The battery disclosed in some embodiments of the present application may, but are not limited to, be used in a power consuming apparatus such as a vehicle, a ship, or an aircraft. A power supply system of the power consuming apparatus may be formed by using the battery and the like disclosed in the embodiments of the present application.

Some embodiments of the present application provide a power consuming apparatus using the battery as a power supply. The power consuming apparatus may be, but is not limited to, a vehicle, a mobile phone, a portable device, a notebook computer, a ship, a spacecraft, an electric toy, an electric tool, and the like. The vehicle may be, but is not limited to, a fuel vehicle, a gas vehicle, or a new energy vehicle, and the new energy vehicle may be, but is not limited to, an all-electric vehicle, a hybrid electric vehicle, or a range-extended vehicle. The spacecraft includes an airplane, a rocket, a space shuttle, a space ship, and the like. The electric toy includes a fixed or mobile electric toy, for example, a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator and an electric planer.

For ease of description, the following embodiment is described by using an example in which a power consuming apparatus according to an embodiment of the present application is a vehicle 50.

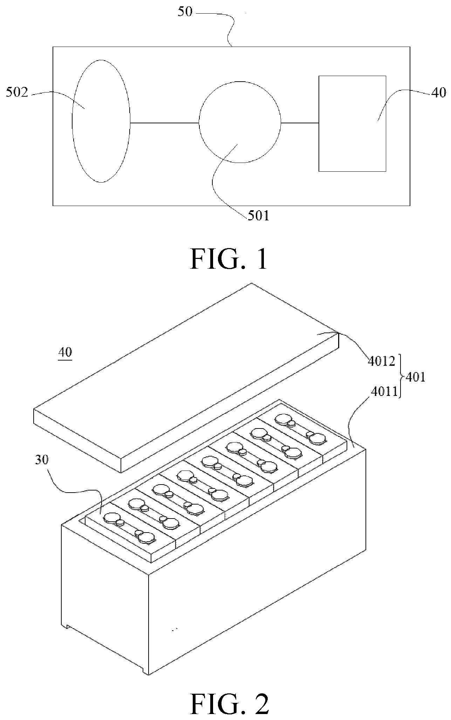

Please refer to FIG. 1, and FIG. 1 is a schematic structural diagram of a vehicle 50 according to some embodiments of the present application. A battery 40 is arranged in the vehicle 50. The battery 40 may be arranged at a bottom, head, or tail of the vehicle 50. The battery 40 may be configured to supply power to the vehicle 50. For example, the battery 40 may be used as an operating power source of the vehicle 50. The vehicle 50 may further include a controller 501 and a motor 502. The controller 501 is electrically connected with the motor 502 and the battery 40 respectively. The controller 501 is configured to control the battery 40 to supply power to the motor 502, for example, to meet working power consuming requirements during starting, navigation, and traveling of the vehicle 50.

In some embodiments of the present application, the battery 40 can not only serve as the operating power source of the vehicle 50, but also serve as a driving power source of the vehicle 50, in place of or partially in place of fuel or natural gas, to provide driving power for the vehicle 50.

In some embodiments of the present application, the battery 40 is a secondary battery. The secondary battery may be in various forms, including, but not limited to, for example, a battery cell, a battery module, and a battery pack. The secondary battery herein refers to a battery whose active substance can be activated for continuous use through charging after the battery is discharged.

Please refer to FIG. 2, and FIG. 2 is an exploded view of a battery 40 according to some embodiments of the present application. The battery 40 includes a box 401 and battery cells 30. The battery cells 30 are accommodated in the box 401. The box 401 is configured to provide an accommodating space for the battery cells 30. The box 401 may be in a variety of structures.

In some embodiments, the box 401 may include a box body 4011 and a box cover body 4012, and the box body 4011 and the box cover body 4012 are configured to lid each other and jointly define the accommodating space for accommodating the battery cells 30. Optionally, the box body 4011 may be of a hollow structure having an opening at one end. The box cover body 4012 may be of a plate-shaped structure. The box cover body 4012 is configured to lid an opening side of the box body 4011.

In the battery 40, there may be a plurality of battery cells 30, and the plurality of battery cells 30 may be in series connection, parallel connection, or series-parallel connection. Series-parallel connection means that the plurality of battery cells 30 are in both series connection and parallel connection. The plurality of battery cells 30 may be directly connected together in series, parallel, or series-parallel, and then a whole formed by the plurality of battery cells 30 is accommodated in the box 401. Certainly, the battery 40 may also be in the form of a battery module formed by the plurality of battery cells 30 that are first connected in series, parallel, or series-parallel. The plurality of battery modules are then connected in series, parallel, or series-parallel to form a whole to be accommodated in the box 401. The battery 40 may also include other structures, such as a bus component (not shown) for achieving an electrical connection between the plurality of battery cells 30.

The battery cell 30 may be in a cylindrical shape, a flat shape, a cuboid shape, or in other shapes.

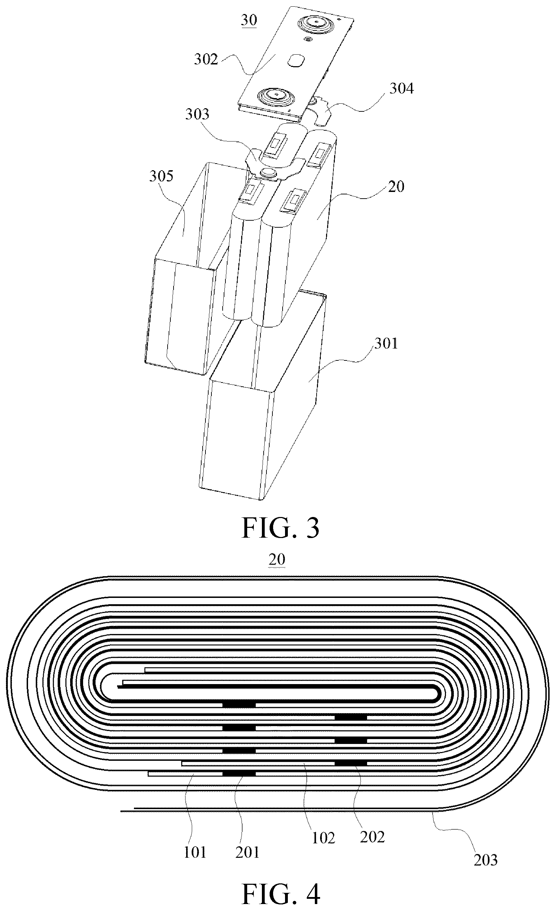

Please refer to FIG. 3, and FIG. 3 is an exploded view of a battery cell 30 according to some embodiments of the present application. The battery cell 30 is a basic unit that realizes mutual conversion of chemical energy and electric energy, and is also the smallest unit forming a battery. As shown in FIG. 3, the battery cell 30 includes a case 301, an end cover 302, an electrode assembly 20, an electrolyte (not shown), and other functional components.

The case 301 is of a hollow structure having an opening at one end. The case 301 is configured to fit the end cover 302 to form an internal environment in which the electrode assembly 20, the electrolyte solution, and other functional components are accommodated. The case 301 may be in various shapes and sizes, such as a cuboid shape, a cylindrical shape, and a hexagonal prism shape. Specifically, the shape of the case 301 may be determined based on a specific shape and size of the electrode assembly 20. The case 301 may be made of various materials, such as copper, iron, aluminum, stainless steel, an aluminum alloy, and plastic, which are not limited herein.

The end cover 302 refers to a component that lids the opening of the case 301 to isolate an internal environment of the battery cell 30 from an external environment. Optionally, a shape of the end cover 302 may be adapted to the shape of the case 301 to fit the case 301. Optionally, the end cover 302 may be made of a material with specified hardness and strength (for example, aluminum alloy), so that the end cover 302 is less likely to deform under extrusion and collision, enabling the battery cell 30 to have a higher structural strength and improved safety performance. The end cover 302 may also be made of various materials, such as copper, iron, aluminum, stainless steel, an aluminum alloy, and plastic, which are not limited herein.

In some embodiments, the battery cell 30 further includes functional components such as a negative electrode adapter 303 and a positive electrode adapter 304. The negative electrode adapter 303 is configured to be electrically connected to a negative electrode tab on the electrode assembly 20, and the positive electrode adapter 304 is configured to be electrically connected to a positive electrode tab on the electrode assembly 20, so as to output or input electric energy of the battery cell 30. It may be understood that, the negative electrode adapter 303 is made of a conductive material, and the material of the negative electrode adapter 303 may be, but is not limited to, copper, iron, or aluminum. The positive electrode adapter 304 is made of a conductive material, and the material of the positive electrode adapter 304 may be, but is not limited to, copper, iron, or aluminum.

In some embodiments, the battery cell 30 further includes an insulator 305, and the insulator 305 is located on an inner side of the case 301 to insulate the case 301 from the electrode assembly 20, thereby reducing a risk of short circuit. Exemplarily, the insulator 305 may be made of plastic, rubber or the like.

One or more electrode assemblies 20 may be included in the case 301.

Please refer to FIG. 4, and FIG. 4 is a schematic structural diagram of an electrode assembly 20 according to some embodiments of the present application. The electrode assembly 20 is a component, in the battery cell 30, that undergoes electrochemical reactions. The electrode assembly 20 is mainly formed by winding or laminating an electrode plate structure formed by integrating a negative electrode plate 101 and a positive electrode plate 102, and a separator 203 is generally arranged between the negative electrode plate 101 and the positive electrode plate 102 adjacent to each other.

The negative electrode plate 101 includes a negative electrode current collector and a negative electrode material layer, and a surface of the negative electrode current collector is coated with the negative electrode material layer. Using a lithium-ion battery as an example, a material of the negative electrode current collector may be copper, the negative electrode material layer includes a negative electrode material, and the negative electrode material may be a silicon-based material or the like.

The positive electrode plate 102 includes a positive electrode current collector and a positive electrode material layer, and a surface of the positive electrode current collector is coated with the positive electrode material layer. Using the lithium-ion battery as an example, a material of the positive electrode current collector may be aluminum, the positive electrode material layer includes a positive electrode material, and the positive electrode material may be lithium cobalt oxide, lithium iron phosphate, ternary lithium, lithium manganese oxide, or the like.

The separator 203 is a porous plastic film, and can allow lithium ions in the electrolyte solution to freely pass through, but separates the negative electrode plate 101 from the positive electrode plate 102, so that electrons inside the battery cannot freely pass through.

The negative electrode current collector and the positive electrode current collector further have portions that are not coated with the active material layer, and these parts without the active material layer are provided with connection tabs. Specifically, a negative electrode tab 201 is connected to the negative electrode current collector, and a positive electrode tab 202 is connected to the positive electrode current collector. During the charging and discharging processes of the battery, the positive electrode material layer and the negative electrode material layer react with the electrolyte solution, the negative electrode tab 201 is connected to the negative electrode adapter 303 and the positive electrode tab 202 is connected to the positive electrode adapter 304 to form a current loop. Certainly, in some embodiments, the portions, which are not coated with the active material layer, in the negative electrode current collector and the positive electrode current collector respectively constitute the tab.

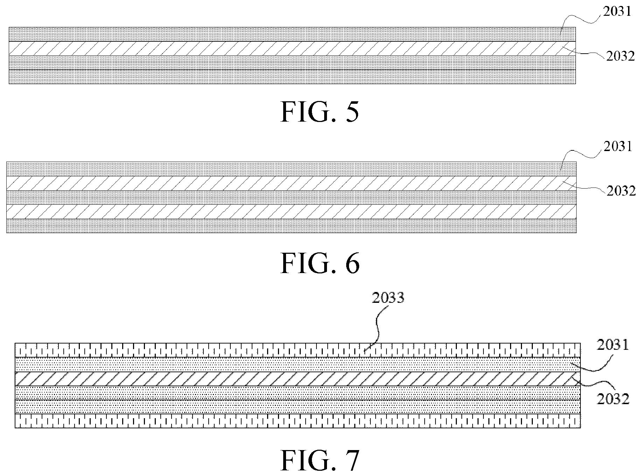

Please refer to FIG. 5 to FIG. 7, some embodiments of the present application provide a separator 203. The separator 203 includes at least three layers of stacked base films 2031. A first bonding layer 2032 bonded to at least two adjacent layers of the base films 2031 is arranged therebetween.

The separator 203 includes the base film 2031, and the base film 2031 may include, but is not limited to, at least one of a porous film and a porous non-woven web. Optionally, the porous film includes a micro-porous film, and the micro-porous film refers to a porous film whose pore size is in a range of 5.0 nm to 1.0 mm. The base film 2031 is made by using an organic high-molecular polymer as a material. The organic high-molecular polymer herein includes, but is not limited to, one or a composite material of two or more of polyolefin, polyether, polyether ether ketone, polyimide, polytetrafluoroethylene, polyvinyl fluoride, polyvinylidene fluoride, polyvinylidene dichloride, a polyethylene-propylene copolymer, and a copolymer containing C-F bonds. There are at least three layers of the base films 2031, and the at least three layers herein mean three layers or more than three layers. Materials of the base films 2031 may be the same or may be different.

That at least three layers of the base films 2031 are stacked means that the base films 2031 are overlapped layer by layer. The stacked base films 2031 may be in direct contact with each other or may be in indirect contact with each other.

The separator 203 further includes the first bonding layer 2032, and the first bonding layer 2032 is a film layer configured to bond two adjacent layers of the base films 2031. It may be understood that, the first bonding layer 2032 is arranged between two layers of the base films 2031. The first bonding layer 2032 may be arranged between every two adjacent layers of the base films 2031, or the first bonding layer 2032 may be arranged between some of two adjacent layers of the base films 2031. That is, in the separator 203, there are one or more first bonding layers 2032. The first bonding layer 2032 includes a binder, and the binder refers to a medium material that enables materials to be closely connected into a whole. The binder includes, but is not limited to, at least one of polyacrylate, an acrylic acid, carboxymethyl cellulose, polypropylene alcohol, polyurethane, polystyrene, vinyl acetate resin, acrylic resin, and chlorinated rubber.

The separator 203 provided in the embodiment of the present application includes at least three layers of the base films 2031, at least three layers of the base films 2031 are stacked, and the first bonding layer 2032 is arranged between at least two layers of the base films 2031, so that the base films 2031 on two sides of the first bonding layer 2032 are bonded by the first bonding layer 2032. The base films 2031 bonded together provide support to each other, thereby improving mechanical properties of the separator 203, making the single-layer base film 2031 not prone to be punctured, and further reducing a risk of the separator 203 being punctured, so as to improve safety performance of a battery to which the separator 203 is applied.

In some embodiments, at least two adjacent layers of the base films 2031 are laminated.

Herein, laminating means that two adjacent layers of the base films 2031 have no other structures arranged therebetween, and are in direct contact with each other. It may be understood that at least two layers of the base films 2031 which are laminated are arranged on at least one side of the first bonding layer 2032. Combinations of different base films 2031 may be implemented by adjusting characteristics of the base films 2031 which are laminated together, such as a material, a porosity, a pore size, and a surface density, so as to adjust the properties of the separator 203, and further expand a material selection range of the base film 2031. As an example, two layers of the base films 2031 which are laminated together are arranged on at least one side of the first bonding layer 2032. Two layers of the base films 2031 are laminated to form a two-layer composite film layer. Compared with the single-layer base film 2031, the two-layer composite film layer has a reduced porosity. Therefore, when the separator 203 is prepared, the base films 2031 whose porosities do not meet requirements may be selected to be combined and then bonded together, so that the porosity of the obtained composite film layer meets the requirements, thereby expanding the material selection range of the base film 2031.

Optionally, two layers of the base films 2031 which are laminated together are bonded together by hot-pressing. That at least two adjacent layers of the base films 2031 are bonded by hot-pressing refers to that at least two adjacent layers of the base films 2031 are composited together through a hot-pressing process. It may be understood that, at least two layers of the base films 2031 that are bonded together by hot-pressing are arranged on at least one side of the first bonding layer 2032. Compared with other compositing manners, a manner of hot-pressing bonding is simple and reliable.

As an example, please refer to FIG. 5, the separator 203 includes three layers of base films 2031 and one first bonding layer 2032, and a structure of the separator 203 is arranged as follows: the base film 2031-the base film 2031-the first bonding layer 2032-the base film 2031.

As an example, the separator 203 includes four layers of base films 2031 and one first bonding layer 2032, and a structure of the separator 203 may be arranged as follows: the base film 2031-the base film 2031-the first bonding layer 2032-the base film 2031-the base film 2031, and in this case, two adjacent layers of the base films 2031 are bonded together by hot-pressing. The structure of the separator 203 may also be arranged as follows: the base film 2031-the first bonding layer 2032-the base film 2031-the base film 2031-the base film 2031, and in this case, three adjacent layers of the base films 2031 are bonded together by hot-pressing.

By arranging at least two layers of the base films 2032 which are laminated on at least one side of the first bonding layer, performance of the separator can be adjusted by combinations of the base films, and meanwhile a material selection range of the base film can be expanded. In some embodiments, the first bonding layer 2032 is arranged between every two adjacent layers of the base films 2031.

As an example, please refer to FIG. 6, the separator 203 includes three layers of base films 2031 and two first bonding layers 2032, and a structure of the separator 203 is arranged as follows: the base film 2031-the first bonding layer 2032-the base film 2031-the first bonding layer 2032-the base film 2031.

As an example, the separator 203 includes four layers of base films 2031 and three first bonding layers 2032, and a structure of the separator 203 is arranged as follows: the base film 2031-the first bonding layer 2032-the base film 2031-the first bonding layer 2032-the base film 2031-the first bonding layer 2032-the base film 2031.

The separator 203 is arranged to include at least three layers of the base films 2031, and every two layers of the base films 2031 are connected by the first bonding layer 2032 sandwiched therebetween, so that overall puncture resistance of the separator 203 is improved and the separator 203 is applicable to some battery types having a high requirement on the puncture resistance of the separator 203.

In some embodiments, the first bonding layer 2032 is a solid particle bonding layer, and solid particles are dispersed in the solid particle bonding layer.

The solid particle refers to a geometric solid having a particular shape with a pore size between nanometer level and millimeter level. The solid particle bonding layer includes solid particles and a binder mixed together. The solid particles herein may include at least one of organic particles and inorganic particles. Optionally, a weight content of the solid particles is in a range of 30% to 50% based on a weight of the first bonding layer 2032. A weight content of the binder is in a range of 10% to 20%.

In the related art, some separators may include a solid particle bonding layer. However, the solid particle bonding layer is usually bonded to an outer side of a base film. When the separator is used, the separator is directly in contact with an electrolyte solution in a battery. With use of the battery, the solid particle bonding layer usually displaces, loosens, or even falls off, consequently degrading the overall performance of the separator.

In the embodiment of the present application, the solid particle bonding layer is sandwiched between two layers of the base films 2031, so that the solid particle bonding layer is bonded to the base films 2031. The base films 2031 are used for supporting and protecting the solid particle bonding layer, thereby preventing displacement of the solid particle bonding layer and improving structural stability of the separator 203. More importantly, for the embodiment of the present application, since the first bonding layer 2032 is sandwiched between two layers of the base films 2031, the first bonding layer 2032 is arranged as the solid particle bonding layer, so that the solid particles are used for improving air permeability of the solid particle bonding layer, thereby improving ion permeability of the separator 203. Particularly, in a case that the solid particle bonding layer is arranged between every two adjacent layers of the base films 2031, the solid particle bonding layer is used for improving strength of the separator 203 and meanwhile effectively ensuring the ion permeability of the separator 203.

In some embodiments, the solid particles are inorganic particles, and the solid particle bonding layer is an inorganic particle bonding layer.

The inorganic particles mean that a material of the solid particle is an inorganic material. The inorganic particles include, but are not limited to, at least one of boehmite ($\gamma$-AlOOH), alumina ($Al_2O_3$), barium sulfate ($BaSO_4$), magnesia ($MgO$), magnesium hydroxide ($Mg(OH)_2$), silicon dioxide ($SiO_2$), tin dioxide ($SnO_2$), titanium oxide ($TiO_2$), calcium oxide ($CaO$), zinc oxide ($ZnO$), zirconium oxide ($ZrO_2$), yttrium oxide ($Y_2O_3$), nickel oxide ($NiO$), cerium oxide ($CeO_2$), zirconium titanate ($SrTiO_3$), barium titanate ($BaTiO_3$), and magnesium fluoride ($MgF_2$).

Generally, the inorganic particles have certain hardness and heat resistance. The solid particle bonding layer is arranged as the inorganic particle bonding layer, so that a mechanical strength and heat resistance of the separator 203 can be improved. In addition, an elastic modulus of the inorganic particles is relatively high, so that the air permeability of the inorganic particle bonding layer is ensured.

In some embodiments, the inorganic particles have a Dv50 in a range of 0.2 $\mu$m to 0.8 $\mu$m.

An average particle size is usually represented by Dv50, which means that percentages of powder particles with particle sizes greater than and small than the average particle size are each 50%. As an example, the inorganic particles may have an average particle size Dv50 of 0.2 $\mu$m, 0.3 $\mu$m, 0.4 $\mu$m, 0.5 $\mu$m, 0.6 $\mu$m, 0.7 $\mu$m, or 0.8 $\mu$m.

Generally, a larger particle size of the inorganic particles indicates a better air permeability of the inorganic particle bonding layer and an improved ion conduction rate of the separator 203. However, the larger particle size of the inorganic particles may cause the base film 2031 to be easily punctured by the inorganic particles, and the particle size of the inorganic particles may also affect a thickness of the inorganic particle bonding layer. A suitable average particle size of the inorganic particles may be selected according to the thickness of the inorganic particle bonding layer, a content of a binder, a number of the inorganic particle bonding layer in the separator 203, and the like. For example, when the thickness of the inorganic particle bonding layer is relatively small, inorganic particles having a relatively small average particle size are selected. For the separator 203 provided in the embodiment of the present application, since there are a plurality of layers of the base films 2031 in the separator 203, to ensure an ion transmission rate of the separator 203, the base film 2031 usually has a relatively small thickness. Moreover, since the inorganic particle bonding layer is sandwiched between the base films 2031, depending on support of the base films 2031, by setting the average particle size Dv50 of the inorganic particles to be in the range of 0.2 $\mu$m to 0.8 $\mu$m, on the one hand, the inorganic particle bonding layer can be made thin, thereby further improving the ion conduction rate of the separator 203; and on the other hand, the risk of the base film 2031 being punctured can be reduced, thereby improving the structural stability of the separator 203.

In some embodiments, the solid particles have a specific surface area in a range of 1.05 m$^2$/g to 1.8 m$^2$/g.

The specific surface area refers to a total area of a material per unit mass, and has a unit of m$^2$/g. As an example, the solid particles have a specific surface area of 1.05 m$^2$/g, 1.1 m$^2$/g, 1.2 m$^2$/g, 1.3 m$^2$/g, 1.4 m$^2$/g, 1.5 m$^2$/g, 1.6 m$^2$/g, 1.7 m$^2$/g, or 1.8 m$^2$/g.

Generally, the specific surface area of the solid particles may affect an infiltration effect of the solid particle bonding layer in an electrolyte solution, and a larger specific surface area of the solid particles indicates a better infiltration effect of the solid particle bonding layer. The specific surface area of the solid particles is set in the range of 1.05 m$^2$/g to 1.8 m$^2$/g to improve an infiltration rate of the separator 203 in the electrolyte solution, thereby further improving the ion conduction rate of the separator 203.

In some embodiments, the first bonding layer 2032 has a thickness in a range of 0.5 $\mu$m to 2 $\mu$m.

As an example, the first bonding layer 2032 may have a thickness of 0.5 $\mu$m, 0.6 $\mu$m, 0.7 $\mu$m, 0.8 $\mu$m, 0.9 $\mu$m, 1.0 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, or 2 $\mu$m.

The thickness of the first bonding layer 2032 may affect the puncture resistance and the ion conduction rate of the separator 203. A larger thickness indicates better puncture resistance, but a lower ion conduction rate. With reference to a structural form of the separator 203 provided in the embodiment of the present application, the first bonding layer 2032 is arranged between the base films 2031, and the thickness of the first bonding layer 2032 is set in the range of 0.5 $\mu$m to 2 $\mu$m, so that within this range, the puncture resistance and the ion conduction rate of the separator 203 can be balanced, and the separator 203 has a relatively high ion conduction rate while having relatively good puncture resistance.

In some embodiments, the base film 2031 has a thickness in a range of 1 $\mu$m to 8 $\mu$m.

As an example, the base film 2031 may have a thickness of 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, 5.5 $\mu$m, 6 $\mu$m, 6.5 $\mu$m, 7 $\mu$m, 7.5 $\mu$m, or 8 $\mu$m.

The thickness of the base film 2031 may affect the puncture resistance and the ion conduction rate of the base film 2031. A thinner base film 2031 has a smaller internal resistance and a higher ion conduction rate, but has a decreased mechanical strength and a poorer puncture strength. With reference to a structural form of the separator 203 provided in the embodiment of the present application, the base films 2031 are arranged to be a plurality of layers, and the thickness of each layer of the base films 2031 is controlled to be in the range of 1 $\mu$m to 8 $\mu$m, and the base film 2031 is made as thin as possible while the base film 2031 is ensured to have a sufficient mechanical strength, so that the puncture resistance and the ion conduction rate of the separator 203 can be balanced, and the separator 203 has a relatively high ion conduction rate while having relatively good puncture resistance.

In some embodiments, the base film 2031 has an average pore size in a range of 100 nm to 800 nm.

Generally, the base film 2031 has a large quantity of micro-pores, and the micro-pores have an average pore size in the range of 100 nm to 800 nm. As an example, the micro-pores may have an average pore size of 100 nm, 150 nm, 200 nm, 250 nm, 300 nm, 350 nm, 400 nm, 450 nm, 500 nm, 550 nm, 600 nm, 650 nm, 700 nm, 750 nm, or 800 nm.

The average pore size of the base film 2031 may affect a tensile strength and the ion conduction rate of the base film 2031. A larger average pore size of the base film 2031 indicates a smaller internal resistance and a higher ion conduction rate, but a decreased tensile strength. With reference to a structural form of the separator 203 provided in the embodiment of the present application, the base films 2031 are arranged to be a plurality of layers, and the average pore size of each layer of the base films 2031 is controlled to be in the range of 100 nm to 800 nm, so that the tensile strength and the ion conduction rate of the separator 203 can be balanced, and the separator 203 has a relatively high ion conduction rate while having a relatively high tensile strength.

In some embodiments, the base film 2031 has a porosity in a range of 30% to 70%.

As an example, the base film 2031 has a porosity of 30%, 35%, 40%, 45%, 50%, 55%, 60%, 65%, or 70%.

The porosity of the base film 2031 may affect the tensile strength and the ion conduction rate of the base film 2031. A larger porosity of the base film 2031 indicates a smaller internal resistance and a higher ion conduction rate, but a decreased tensile strength. With reference to a structural form of the separator 203 provided in the embodiment of the present application, the porosity of the base film 2031 is controlled to be in the range of 30% to 70%, so that the tensile strength and the ion conduction rate of the separator 203 can be balanced, and the separator 203 has a relatively high ion conduction rate while having a relatively high tensile strength.

In some embodiments, the base film 2031 has a surface density in a range of 2 $g/m^2$ to 10 $g/m^2$.

The surface density refers to a mass of a substance, having a specified thickness, per unit area, and has a unit of $g/m^2$. As an example, the base film 2031 has a surface density of 2 $g/m^2$, 3 $g/m^2$, 4 $g/m^2$, 5 $g/m^2$, 6 $g/m^2$, 7 $g/m^2$, 8 $g/m^2$, 9 $g/m^2$, or 10 $g/m^2$.

Since the base film 2031 has a large quantity of micro-pores, as a number of the micro-pores increases, the surface density of the base film 2031 decreases. The surface density of the base film 2031 is set in the range of 2 $g/m^2$ to 10 $g/m^2$, so that the base film 2031 has a medium porosity and air permeability, which is beneficial to balance the tensile strength and the ion conduction rate of the separator 203.

In some embodiments, the separator 203 has an air permeability in a range of 300 s/100 cc to 500 s/100 cc.

The air permeability of the separator 203 refers to a degree of allowing gas to pass through the separator 203. A method for testing the air permeability of the separator 203 is as follows: fix the separator 203; apply an air pressure to one side of the separator 203; measure a pressure drop of the air pressure and required time; and detect the air permeability of the separator 203. When the separator 203 is fixed, certain air pressure is applied to one side of the separator 203. Due to the micro-poles existing on the separator 203, the air pressure gradually decreases to an atmospheric pressure. By comparing the time required for the pressure to decrease from an initial pressure to a termination pressure, the air permeability of the separator 203 can be known. By comparing the pressure drop time of different separators 203, the air permeability performance of the different separators may be compared. A shorter pressure drop time indicates better air-permeable performance.

As an example, the separator 203 has an air permeability of 300 s/100 cc, 350 s/100 cc, 400 s/100 cc, 450 s/100 cc, or 500 s/100 cc.

The air permeability of the separator 203 is set in the range of 300 s/100 cc to 500 s/100 cc, so that when the separator 203 is applied to a battery, the battery has good electrochemical performance.

In some embodiments, the separator 203 has a porosity in a range of 25% to 65%.

As an example, the separator 203 has a porosity of 25%, 30%, 35%, 40%, 45%, 50%, 55%, 60%, or 65%.

The porosity of the separator 203 is set in the range of 25% to 65%, so that when the separator 203 is applied to a battery, the battery has good electrochemical performance.

In some embodiments, the separator 203 has a transverse direction (TD) tensile strength of greater than 1000 $kg/cm^2$.

A tensile strength refers to a maximum tensile force that a material can bear after being stretched and deformed. Specifically, the tensile strength includes a machine direction (MD) tensile strength and the transverse direction (TD) tensile strength, where the MD is a mechanical stretching direction, and the TD is perpendicular to the mechanical stretching direction.

As an example, the TD tensile strength of the separator 203 may be, but is not limited to, 1000 $kg/cm^2$, 1050 $kg/cm^2$, 1100 $kg/cm^2$, 1200 $kg/cm^2$, 1300 $kg/cm^2$, or 1400 $kg/cm^2$.

The above separator 203 has good mechanical properties.

In some embodiments, the separator 203 has the MD tensile strength of greater than 1200 $kg/cm^2$.

As an example, the MD tensile strength of the separator 203 may be, but is not limited to, 1200 $kg/cm^2$, 1250 $kg/cm^2$, 1300 $kg/cm^2$, 1400 $kg/cm^2$, 1500 $kg/cm^2$, or 1600 $kg/cm^2$.

The above separator 203 has good mechanical properties.

In some embodiments, the separator 203 has a thickness in a range of 3 $\mu$m to 14 $\mu$m.

As an example, the separator 203 has a thickness of 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, or 14 $\mu$m.

The thickness of the separator 203 affects the mechanical properties and the ion conduction rate of the separator 203. An increase in the thickness of the separator 203 enhances the mechanical properties of the separator 203, but decreases the ion conduction rate. Within the above thickness range, the separator 203 has good mechanical properties and ion conduction rate.

In some embodiments, the separator 203 further includes a second bonding layer 2033 on one side of the base film 2031 facing away from the first bonding layer 2032. The second bonding layer 2033 is formed as an outermost layer of the separator 203. The first bonding layer 2032 is a ceramic coated separator (CCS) layer, and the second bonding layer 2033 is a polymer coated separator (PCS) layer.

It may be understood that the first bonding layer 2032 and the second bonding layer 2033 are not located on the same side of the base film 2031. Optionally, only the first bonding layer 2032 is bonded to the base film 2031. Optionally, only the second bonding layer 2033 is bonded to the base film 2031. Optionally, both the first bonding layer 2032 and the second bonding layer 2033 are arranged on the base film 2031, and the first bonding layer 2032 and the second bonding layer 2033 are respectively located on two sides of the base film 2031.

The second bonding layer 2033 is formed as the outermost layer of the separator 203, namely, when the separator 203 is used, the second bonding layer 2033 is configured to make direct contact with an electrode. It should be noted herein that there may be one or two second bonding layers 2033.

The first bonding layer 2032 is the ceramic coated separator (CCS) layer, namely, the solid particles included in the first bonding layer 2032 are ceramic particles. As inorganic particles, the ceramic particles can improve the mechanical strength and heat resistance of the separator 203.

The second bonding layer 2033 is the polymer coated separator (PCS) layer, namely, the second bonding layer 2033 includes an organic polymer, so that adhesion between the separator 203 and an electrode can be improved.

As an example, please refer to FIG. 7, the separator 203 includes three layers of base films 2031, one first bonding layer 2032, and two second bonding layers 2033, and a structure of the separator 203 is arranged as follows: the second bonding layer 2033-the base film 2031-the base film 2031-the first bonding layer 2032-the base film 2031-the second bonding layer 2033.

As an example, the separator 203 includes three layers of base films 2031, two first bonding layers 2032, and two second bonding layers 2033, and a structure of the separator 203 may be arranged as follows: the second bonding layer 2033-the base film 2031-the first bonding layer 2032-the base film 2031-the first bonding layer 2032-the base film 2031-the second bonding layer 2033.

By arranging the CCS layer and the PCS layer in the separator 203, the CCS layer and the PCS layer are not located on the same side of the base film 2031, the CCS layer is located between the base films 2031, namely, located in the separator 203, and the PCS layer is formed as the outermost layer of the separator 203. By arranging the CCS layer, the mechanical properties (including the puncture resistance and the tensile strength) of the separator 203 are improved. The base film 2031 is used for supporting and protecting the CCS layer, thereby improving the structural stability of the separator 203. When the separator 203 is used, the PCS layer may be bonded to an electrode plate of a battery, thereby improving a contact interface between the separator 203 and the electrode plate, and improving consistency of the battery.

For ease of understanding the structure of the separator 203, a manufacturing process of the separator 203 is described as an example: provide a base film 2031; coat the base film 2031 with a slurry coating, where the slurry coating includes inorganic particles, a solvent, and a binder; cover the slurry coating with another base film 2031; and perform drying and hot-pressing to obtain the separator 203. The slurry coating has a solid content in a range of 35 wt% to 50wt%; a coating speed of greater than 50 m/min; and a slurry viscosity in a range of 250 mpa.s to 380 mpa.s.

The present application is further described below with reference to specific embodiments.

**Embodiment 1**

S1: Prepare a polyethylene (PE) base film (having a thickness of 3 $\mu$m, an average pore size of 100 nm, and a surface density of 2.2 g/m$^2$) and a polypropylene (PP) base film (having a thickness of 3 $\mu$m, an average pore size of 100 nm, and a surface density of 2.4 g/m$^2$) from raw materials such as PE or PP by using a melt-extruding device and a hot-stretching device, where the PE base film and the PP base film are both micro-porous films.

S2: Mix boehmite, polyacrylate, and carboxymethyl cellulose uniformly at a ratio of 4: 1: 1 in an appropriate amount of deionized water solvent to prepare a coating slurry, and the coating slurry is used for preparing a CCS layer.

S3: Coat the PE base film with the coating slurry by using a coating machine, another unwinding roller supplies a PP/PE two-layer base film, which is attached to a coating slurry surface, control an oven temperature to 35°C, perform drying for 5 s, and perform pressing fit at a pressure of 10 N, so as to obtain a composite film, where the CCS layer has a thickness of 0.5 $\mu$m.

S4: Place the composite film on a PCS coating machine table to be subjected to double-side PCS coating, in this case, the CCS layer and a PCS layer are respectively located on two sides of the base film, so as to obtain a separator, where a structure of the separator is PCS/PE/CCS/PP/PE/PCS.

**Embodiment 2**

Embodiment 2 is the same as Embodiment 1 and differs from Embodiment 1 in that the CCS layer is controlled to have a thickness of 1.2 $\mu$m in step S3.

**Embodiment 3**

Embodiment 3 is the same as Embodiment 1 and differs from Embodiment 1 in that the CCS layer is controlled to have a thickness of 2 $\mu$m in step S3.

**Embodiment 4**

Embodiment 4 is the same as Embodiment 1 and differs from Embodiment 1 in that the PE base film and the PP base film have a thickness of 5 $\mu$m in step S1.

**Embodiment 5**

Embodiment 5 is the same as Embodiment 1 and differs from Embodiment 1 in that the PE base film and the PP base film have a thickness of 6 $\mu$m in step S1.

**Embodiment 6**

Embodiment 6 is the same as Embodiment 1 and differs from Embodiment 1 in that the PE base film and the PP base film have a pore size of 300 nm in step S1.

**Embodiment 7**

Embodiment 7 is the same as Embodiment 1 and differs from Embodiment 1 in that the PE base film and the PP base film have a pore size of 600 nm in step S1.

**Embodiment 8**

Embodiment 8 is the same as Embodiment 1 and differs from Embodiment 1 in that the PE base film and the PP base film have a pore size of 800 nm in step S1.

Comparative Example 1

S1: Prepare the following two types of films from the raw material polyethylene by using a melt-extruding device and a hot-stretching device: a polyethylene (PE) base film (having a thickness of 3 $\mu$m, an average pore size of 100 nm, and a surface density of 2.2 g/m$^2$), and a polyethylene (PE) base film (having a thickness of 6 $\mu$m, an average pore size of 100 nm, and a surface density of 2.2 g/m$^2$).

S2: Mix boehmite, polyacrylate, and carboxymethyl cellulose uniformly at a ratio of 4: 1: 1 in an appropriate amount of deionized water solvent to prepare a coating slurry, and the coating slurry is used for preparing a CCS layer.

S3: Coat one PE base film with the coating slurry by using a coating machine, another unwinding roller supplies another PE base film, which is attached to a coating slurry surface, control an oven temperature to 35°C, perform drying for 5 s, and perform pressing fit at a pressure of 10 N, so as to obtain a composite film, where the CCS layer has a thickness of 0.5 $\mu$m.

S4: Place the composite film on a PCS coating machine table to be subjected to double-side PCS coating, in this case, the CCS layer and a PCS layer are respectively located on two sides of the base film, so as to obtain a separator, where a structure of the separator is PCS/PE/CCS/PE/PCS.

To verify the improvement of the embodiments of the present application, samples prepared in Embodiments 1 to 8 and Comparative Example 1 are tested:

Test method:

1 Break resistance test:

S1. Sample preparation: Cut samples with a diameter greater than 65 mm, and flatly lay the samples on a testing machine table.

S2. Testing: Install a puncture jig on a tensile machine, where a needle has a diameter of 1 mm, initiate a test and continue until the separator is punctured, at least three parallel samples are tested each time, a display of the tensile machine displays test values, and calculate an average value.

2. Thermal shrinkage test:

S1. Sample preparation: Punch samples with a width of 50 mm and a length of 100 mm by a punching machine, take and place five to ten parallel samples in a glass plate, and fix four sides of each sample by paper clips.

S2. Testing: Set an air-blowing type oven to have a specified temperature such as 250°C, after the set temperature is reached and stabilized for 60 min, place the glass plate in the oven for 1 h, measure a length and a width of the separator, and mark values as a and b respectively.

S3. Calculation:

Length direction shrinkage

$$A=(100-a)/100\times100\%;$$

Width direction shrinkage

$$B=(50-b)/50\times100\%;$$

and
record values of A and B respectively, and calculate an average value from five measurements.

3. Ion conduction rate test:

S1. Sample preparation: Punch the separator to sample pieces with a particular size (45.3 mm×33.7 mm), and prepare test samples 1 to 4 respectively by alternately stacking lithium pieces and the separator. The test sample 1 includes two lithium pieces and one layer of separator. The test sample 2 includes three lithium pieces and two layers of separator. The test sample 3 includes four lithium pieces and three layers of separator. The test sample 4 includes five lithium pieces and four layers of separator. Place the test sample in an outer packaging, and inject an electrolyte solution to obtain a symmetrical battery.
S2. Testing: Perform a constant-voltage alternating-current impedance spectroscopy test on the separator having different numbers of layers by using a Bio-logic electrochemical workstation to obtain the ion conduction rate.

4. Battery performance test:

S1. Sample preparation: Prepare a nickel-cobalt-manganese (NCM) 811 lithium-ion battery.
S2. Testing: Perform a cycle test on the prepared lithium-ion battery at 25°C according to the following program: perform full charging and full discharging at a rate of 1 C until the capacity of the lithium-ion battery is less than 80% of an initial capacity, and record a number of cycles.
Test results are as shown in Table 1.

Table 1

| | Separator structure: Base film 1/bonding layer/base film 2/base film 3 | | | | Separator performance | | | Battery performance |
|---|---|---|---|---|---|---|---|---|
| | Material/thickness (μm)/pore size (nm) | | | | Ion conduction rate % | Puncture resistance gf | (MD) thermal shrinkage% at 250°C | Cycle performance |
| | Base film 1 | Bonding layer | Base film 2 | Base film 3 | | | | |
| Embodiment 1 | PE/3/100 | CCS/0.5 | PP/3/100 | PE/3/100 | 90 | 530 | 0.9 | 1600 |
| Embodiment 2 | PE/3/100 | CCS/1.2 | PP/3/100 | PE/3/100 | 89 | 550 | 0.6 | 1700 |
| Embodiment 3 | PE/3/100 | CCS/2 | PP/3/100 | PE/3/100 | 87 | 570 | 0.4 | 1800 |
| Embodiment 4 | PE/5/100 | CCS/0.5 | PP/5/100 | PE/5/100 | 84 | 580 | 1.0 | 1600 |
| Embodiment 5 | PE/6/100 | CCS/0.5 | PP/6/100 | PE/6/100 | 82 | 600 | 1.1 | 1550 |
| Embodiment 6 | PE/3/300 | CCS/0.5 | PP/3/300 | PE/3/300 | 92 | 510 | 1.3 | 1600 |
| Embodiment 7 | PE/3/600 | CCS/0.5 | PP/3/600 | PE/3/600 | 95 | 490 | 1.5 | 1500 |

(continued)

| | Separator structure: Base film 1/bonding layer/base film 2/base film 3 | | | | Separator performance | | | Battery performance |
|---|---|---|---|---|---|---|---|---|
| | Material/thickness (μm)/pore size (nm) | | | | Ion conduction rate % | Puncture resistance gf | (MD) thermal shrinkage% at 250°C | Cycle performance |
| | Base film 1 | Bonding layer | Base film 2 | Base film 3 | | | | |
| Embodiment 8 | PE/3/800 | CCS/0.5 | PP/3/800 | PE/3/800 | 97 | 460 | 1.7 | 1350 |
| Comparative Example 1 | PE/3/100 | CCS/0.5 | PE/6/100 | None | 83 | 340 | 3.6 | 800 |

It can be seen from Table 1 that, in Embodiment 1 to Embodiment 3, the CCS layer respectively has a thickness of 0.5 μm, 1.2 μm, and 2 μm. As the thickness of the CCS layer increases, the thickness of the separator increases, and therefore, the ion conduction rate of the separator decreases. In addition, the CCS layer includes inorganic particle boehmite having a relatively good mechanical strength and heat resistance. As the thickness of the CCS layer increases, the puncture resistance of the separator is improved, and the thermal shrinkage decreases. Finally, the cycle performance of a battery to which the separator is applied is improved. As the puncture resistance and thermal stability of the separator are improved, the separator is not prone to short circuit of a cathode and an anode of the battery caused by puncture by a lithium dendrite, and therefore the number of cycles of the battery increases.

It can be seen from Table 1 that, in Embodiment 1, Embodiment 4, and Embodiment 5, the base film respectively has a thickness of 3 μm, 5 μm, and 6 μm. As the thickness of the base film increases, the thickness of the separator increases, the ion conduction rate of the separator decreases, and the puncture resistance is improved, but the thermal shrinkage slightly increases. Generally, improvement in the puncture resistance of the separator can improve the cycle performance of the battery. However, an increase in the thermal shrinkage may negatively affect the cycle performance of the battery, which finally results in that the cycle performances of the batteries provided in Embodiment 1, Embodiment 4, and Embodiment 5 are similar as a whole.

It can be seen from Table 1 that, in Embodiment 1, and Embodiment 6 to Embodiment 8, the base film respectively has a pore size of 100 nm, 300 nm, 600 nm, and 800 nm. As the pore size increases, the ion conduction rate of the separator increases, the puncture resistance decreases, the thermal shrinkage increases, and finally the cycle performance of the battery decreases. Because the puncture resistance of the separator decreases, and the thermal shrinkage increases, both of them exacerbate the risk of short circuit of a cathode and an anode of a battery, thereby reducing the number of cycles of the battery.

It can be seen from Table 1 that, comparing Embodiment 1 with Comparative Example 1, the separator provided in Embodiment 1 is superior to Comparative Example 1 in terms of the ion conduction rate, the puncture resistance, and the thermal stability, because the performance of a double-layer film formed by compositing the 3 μm PP base film and the 3 μm PE base film in Embodiment 1 is better than the performance of the single-layer 6 μm PE base film, so that finally the performance of the separator is improved.

Finally, it should be noted that: the above-mentioned embodiments are merely used for describing the technical solutions of the present application, but are not intended to limit the present application. Although the present application is described in detail with reference to the foregoing embodiments, it should be appreciated by those of ordinary skill in the art that, modifications may still be made to the technical solutions described in the foregoing embodiments, or equivalent replacements may be made to some or all of the technical features; and these modifications or replacements will not cause the essence of corresponding technical solutions to depart from the scope of the technical solutions in the embodiments of the present application, and should be all included in the scope of the claims and the specification of the present application. Especially, as long as there is no structural conflict, the various technical features mentioned in each embodiment can be combined in any way. The present application is not limited to the specific embodiments disclosed herein, but includes all technical solutions that fall within the scope of the claims.

## Claims

1.   A separator, comprising at least three layers of stacked base films, wherein a first bonding layer bonded to at least two adjacent layers of the base films is arranged therebetween.

2.   The separator according to claim 1, wherein at least two adjacent layers of the base films are laminated.

3. The separator according to claim 1, wherein the first bonding layer is arranged between every two adjacent layers of the base films; or, the first bonding layer is arranged between some of two adjacent layers of the base films.

4. The separator according to any one of claims 1 to 3, wherein the first bonding layer is a solid particle bonding layer, and solid particles are dispersed in the solid particle bonding layer.

5. The separator according to claim 4, wherein the solid particles are inorganic particles and/or organic particles, and the solid particle bonding layer is an inorganic particle bonding layer and/or an organic particle bonding layer.

6. The separator according to claim 5, wherein in a case that the solid particles are inorganic particles, the inorganic particles have a Dv50 in a range of 0.2 $\mu$m to 0.8 $\mu$m.

7. The separator according to any one of claims 4 to 6, wherein the solid particles have a specific surface area in a range of 1.05 m$^2$/g to 1.8 m$^2$/g.

8. The separator according to any one of claims 1 to 7, wherein the first bonding layer has a thickness in a range of 0.5 $\mu$m to 2 $\mu$m.

9. The separator according to any one of claims 1 to 7, wherein the base film has a thickness in a range of 1 $\mu$m to 8 $\mu$m; and/or, the base film has an average pore size in a range of 100 nm to 800 nm; and/or, the base film has a porosity in a range of 30% to 70%; and/or, the base film has a surface density in a range of 2 g/m$^2$ to 10 g/m$^2$.

10. The separator according to any one of claims 1 to 7, wherein the separator has an air permeability in a range of 300 s/100 cc to 500 s/100 cc; and/or, the separator has a porosity in a range of 25% to 65%; and/or, the separator has a transverse direction (TD) tensile strength of greater than 1000 kg/cm$^2$; and/or, the separator has a machine direction (MD) tensile strength of greater than 1200 kg/cm$^2$; and/or, the separator has a thickness in a range of 3 $\mu$m to 14 $\mu$m.

11. The separator according to any one of claims 1 to 7, wherein the separator further comprises a second bonding layer on one side of the base film facing away from the first bonding layer, the second bonding layer is formed as an outermost layer of the separator, the first bonding layer is a ceramic coated separator (CCS) layer, and the second bonding layer is a polymer coated separator (PCS) layer.

12. The separator according to claim 1, wherein two layers of the base films which are laminated are arranged on at least one side of the first bonding layer.

13. The separator according to claim 1, wherein a structure of the separator is arranged as follows:

    the base film-the base film-the first bonding layer-the base film;
    or, the base film-the first bonding layer-the base film-the first bonding layer-the base film;
    or, the base film-the first bonding layer-the base film-the first bonding layer-the base film-the first bonding layer-the base film.

14. The separator according to any one of claims 1 to 7, wherein the base film comprises at least one of a porous film and a porous non-woven web.

15. The separator according to any one of claims 1 to 7, wherein the base film comprises an organic high-molecular polymer, and the organic high-molecular polymer comprises one or two or more of polyolefin, polyether, polyether ether ketone, polyimide, polytetrafluoroethylene, polyvinyl fluoride, polyvinylidene fluoride, polyvinylidene dichloride, a polyethylene-propylene copolymer, and a copolymer containing C-F bonds;
and/or,

    the first bonding layer comprises a binder, and the binder comprises at least one of polyacrylate, an acrylic acid, carboxymethyl cellulose, polypropylene alcohol, polyurethane, polystyrene, vinyl acetate resin, acrylic resin, and chlorinated rubber;
    and/or,
    in a case that the solid particles are inorganic particles, the inorganic particles comprise, but are not limited to, at least one of boehmite, alumina, barium sulfate, magnesia, magnesium hydroxide, silicon dioxide, tin dioxide, titanium oxide, calcium oxide, zinc oxide, zirconium oxide, yttrium oxide, nickel oxide, cerium oxide, zirconium titanate, barium titanate, and magnesium fluoride.

16. The separator according to claim 11, wherein a structure of the separator is arranged as follows:

the second bonding layer-the base film-the base film-the first bonding layer-the base film-the second bonding layer;
or, the second bonding layer-the base film-the first bonding layer-the base film-the first bonding layer-the base film-the second bonding layer.

17. The separator according to claim 16, wherein the second bonding layer is a PCS layer.

18. A battery, comprising a positive electrode plate, a negative electrode plate, and the separator according to any one of claims 1 to 17 separating the positive electrode plate from the negative electrode plate.

19. A power consuming apparatus, comprising the battery according to claim 18.

50

502

501

40

FIG. 1

40

4012
4011
} 401

30

FIG. 2

30

302

304

303

305

20

301

## FIG. 3

20

101  201  102  202  203

## FIG. 4

FIG. 5

FIG. 6

FIG. 7

## INTERNATIONAL SEARCH REPORT

| International application No. |
|---|
| **PCT/CN2023/141016** |

| | |
|---|---|
| **A.** | **CLASSIFICATION OF SUBJECT MATTER** |

H01M50/449(2021.01)i; H01M50/491(2021.01)i; H01M50/497(2021.01)i; H01M50/494(2021.01)i; H01M50/417(2021.01)i; H01M50/434(2021.01)i; H01M50/414(2021.01)i

According to International Patent Classification (IPC) or to both national classification and IPC

| | |
|---|---|
| **B.** | **FIELDS SEARCHED** |

Minimum documentation searched (classification system followed by classification symbols)

IPC:H01M50

Documentation searched other than minimum documentation to the extent that such documents are included in the fields searched

Electronic data base consulted during the international search (name of data base and, where practicable, search terms used)

CNTXT, CNABS, VEN, CNKI: 隔离膜, 基膜, 基材, 粘结层, 粘接层, 颗粒, 电池, battery, cell, electric cell, barrier film, basement, membrane, substrate, binding course, adhesive linkage, grain, particulate

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 219873925 U (NINGDE CONTEMPORARY AMPEREX TECHNOLOGY CO., LTD.) 20 October 2023 (2023-10-20) description, paragraphs 0004-0155 | 1-19 |
| X | CN 218827690 U (TIANJIN B&M SCIENCE AND TECHNOLOGY CO., LTD.) 07 April 2023 (2023-04-07) description, paragraphs 0006-0016, and figure 1 | 1-19 |
| A | CN 109980164 A (NINGDE AMPEREX TECHNOLOGY LTD.) 05 July 2019 (2019-07-05) description, paragraphs 0003-0024, and figures 1-2 | 1-19 |
| A | CN 115832623 A (NINGDE CONTEMPORARY AMPEREX TECHNOLOGY CO., LTD.) 21 March 2023 (2023-03-21) description, paragraphs 0005-0150 | 1-19 |
| A | CN 102569701 A (NINGDE AMPEREX TECHNOLOGY LTD.) 11 July 2012 (2012-07-11) entire document | 1-19 |

| ✓ Further documents are listed in the continuation of Box C. | ✓ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 March 2024** | **18 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/141016** |

### C. DOCUMENTS CONSIDERED TO BE RELEVANT

| Category* | Citation of document, with indication, where appropriate, of the relevant passages | Relevant to claim No. |
| --- | --- | --- |
| A | CN 113708008 A (HUIZHOU LIWINON NEW ENERGY TECHNOLOGY CO., LTD.) 26 November 2021 (2021-11-26)<br>entire document | 1-19 |
| A | CN 115714235 A (WUHAN WEIMEI NEW MATERIAL TECHNOLOGY CO., LTD.) 24 February 2023 (2023-02-24)<br>entire document | 1-19 |

Form PCT/ISA/210 (second sheet) (July 2022)

## INTERNATIONAL SEARCH REPORT
### Information on patent family members

International application No.

**PCT/CN2023/141016**

| Patent document cited in search report | | | Publication date (day/month/year) | Patent family member(s) | | | Publication date (day/month/year) |
|---|---|---|---|---|---|---|---|
| CN | 219873925 | U | 20 October 2023 | None | | | |
| CN | 218827690 | U | 07 April 2023 | None | | | |
| CN | 109980164 | A | 05 July 2019 | EP | 3712983 | A1 | 23 September 2020 |
| | | | | EP | 3712983 | B1 | 30 August 2023 |
| | | | | US | 2020303707 | A1 | 24 September 2020 |
| | | | | US | 11374286 | B2 | 28 June 2022 |
| CN | 115832623 | A | 21 March 2023 | None | | | |
| CN | 102569701 | A | 11 July 2012 | None | | | |
| CN | 113708008 | A | 26 November 2021 | None | | | |
| CN | 115714235 | A | 24 February 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202320838552